# EUROPÄISCHE PATENTANMELDUNG

(11) **EP 2 607 746 A1**
(43) Veröffentlichungstag der Anmeldung: **26.06.2013**
(21) Anmeldenummer: 11009963.7
(22) Anmeldetag: 19.12.2011
(51) Int. Cl.: F16G 11/00

(54) **Seilbremsanordnung**

(71) Anmelder: Isofer AG, 8934 Knonau (CH)
(72) Erfinder: Weber, Hans, 6312 Steinhausen (CH)
(74) Vertreter: Schaad, Balass, Menzl & Partner AG

(57) **Zusammenfassung**

Die Seilbremsanordnung umfasst ein von einer ersten Anschlussstelle (14) zu einer zweiten Anschlussstelle (34) verlaufendes Bremselement (10), welches eine, die erste Anschlussstelle (14) bildende, Bremsplatte (16) sowie ein erstes Seilstück (18) und ein zweites Seilstück (20) aufweist. Die Seilstücke (18, 20) sind mit der zweiten Anschlussstelle (34) fest verbunden. Die Bremsplatte (16) weist eine erste Reihe (28) von Durchlässen (30) und eine zweite Reihe (32) von Durchlässen (30) auf, durch welche das erste beziehungsweise zweite Seilstück (18, 20) mit Widerstand durchziehbar ist. In betriebsbereitem Zustand weisen das erste Seilstück (18) einerseits, von der zweiten Anschlussstelle (14) zur Bremsplatte (16), einen ersten Zugabschnitt (42) und andererseits einen, einen maximalen Bremsweg (44) bestimmenden, frei von der Bremsplatte (16) wegstehenden ersten Bremswegabschnitt (46), sowie das zweite Seilstück (20) einerseits, von der zweiten Anschlussstelle (34) zur Bremsplatte (16), einen zweiten Zugabschnitt (48') und andererseits einen frei von der Bremsplatte (16) wegstehenden zweiten Bremswegabschnitt (50) auf. Der erste Zugabschnitt (42) ist kürzer als der zweite Zugabschnitt (48'), sodass bei einer Bremsung nur der erste Bremswegabschnitt (46) durch die Bremsplatte (16) gezogen wird, bis der erster Zugabschnitt (42) die gleiche Länge wie der zweite Zugabschnitt (48') erreicht, und dann beide Bremswegabschnitte (46', 50) miteinander durch die Bremsplatte (16) gezogen werden.

## Beschreibung

Die vorliegende Erfindung betrifft eine Seilbremsanordnung gemäss Patentanspruch 1.

Eine Seilbremsanordnung ist aus der CH 697 305 B1 bekannt. Die Seilbremsanordnung weist zwei Anschlussstellen auf. Zwischen diesen Anschlussstellen ist ein Seilbremselement mit einer mit Bohrungen versehenen Bremsplatte und mit mehreren durch die Bohrungen mit Widerstand durchziehbaren Seilstücken vorgesehen. Die Bremsplatte ist mit den in mehreren Reihen hintereinander liegenden Bohrungen und an einem Ende mit der ersten Anschlussstelle versehen. An der zweiten Anschlussstelle sind die Seilstücke miteinander verbunden. Jedes der Seilstücke ist einzeln durch je eine Reihe der hintereinander liegenden Bohrungen, unter Wechsel der Durchführungsrichtung der Seilstücke in den aufeinanderfolgenden Bohrungen, durchgeführt. Die Seilstücke sind gleich ausgebildet und beim Ausfahren der Seilbremse sind alle Seilstücke miteinander über den gesamten Bremsweg wirksam.

Im Allgemeinen ermöglichen Seilbremsanordnungen den Abbau oder die Kompensation von plötzlichen Überbeanspruchungen auf Tragseile einer Schutzvorrichtung. Die Schutzvorrichtung weist üblicherweise Rückhalte-, Abspann-und Tragseile auf und ist an Erd- oder Felsankern befestigt. Die Tragseile tragen ein Schutznetz bzw. Schutznetze. Entsprechend fällt herabfallendes Gestein von einem Steinschlag oder eine Lawine in das Schutznetz und die Tragseile der Schutzvorrichtung werden derart auf Zug beansprucht, dass mittels der Seilbremsanordnung eine Gegenkraft oder Bremskraft der Zugkraft auf die Tragseile, die Stütze und das Schutznetz entgegenwirkt.

In der Natur können Gestein, Schnee, Eis oder dergleichen in sehr unregelmässigen Mengen in das Schutznetz fallen, so dass die Belastung auf die Tragseile, die Stütze und das Schutznetz schrittartig ansteigen kann. Entsprechend können Schutzvorrichtungen in der Schweiz nach der Richtlinie vom Bundesamt für Umwelt, Wald und Landschaft (BUWAL) über die Typenprüfung von Schutznetzen gegen Steinschlag gemäss 2001 und der Ergänzungen gemäss 2006 geprüft werden. Je nach Einsatzbereich der Schutzvorrichtung sind unterschiedliche Energieklassen für eine Typenprüfung vorgesehen und definieren eine halbe sowie eine volle Energie eines Wurfkörpers. Hierbei dürfen die Schutznetze bei der entsprechenden Typenprüfung die maximalen elastischen und plastischen Verformungen der Schutzvorrichtung bei Wurf des Wurfkörpers mit halber Energie bzw. darauffolgend voller Energie in das Schutznetz ein bestimmtes Mass nicht überschreiten.

Es ist daher eine Aufgabe der vorliegenden Erfindung eine Seilbremsanordnung derart auszubilden, dass sie in der Natur über einen längeren Zeitraum eingesetzt werden kann und die geforderten Prüfnormen für einen grossen Einsatzbereich einhält.

Diese Aufgabe wird mit einer Seilbremsanordnung gelöst, welche die Merkmale des Patentanspruchs 1 aufweist.

Die erfindungsgemässe Seilbremsanordnung, insbesondere für Rückhalte-, Abspann- und Tragseile von Steinschlag-, Murgang- und Schneeverbauungen, ist mit einem von einer ersten Anschlussstelle zu einer zweiten Anschlussstelle verlaufenden Bremselement versehen. Das Bremselement weist wenigstens ein erstes Bremsorgan und ein zweites Bremsorgan auf, und lässt bei einer Bremsung einen maximalen Bremsweg zu. In einem ersten Bremswegabschnitt des maximalen Bremsweges entfaltet das erste Bremsorgan Bremswirkung. In einem zweiten Bremswegabschnitt des maximalen Bremsweges entfaltet das erste und das zweite Bremsorgan Bremswirkung oder das zweite Bremsorgan entfaltet Bremswirkung, so dass die Bremswirkung im zweiten Bremswegabschnitt grösser als im ersten Bremswegabschnitt ist.

Es sei erwähnt, dass im ersten Bremswegabschnitt das zweite Bremsorgan vollständig oder wenigstens annähernd bremswirkungslos sein kann.

Ebenso kann das im zweiten Bremswegabschnitt erste Bremsorgan vollständig oder wenigstens annähernd bremswirkungslos sein.

Die Bezeichnung wenigstens annähernd bremswirkungslos soll zum Ausdruck bringen, dass das entsprechende Bremsorgan im entsprechenden Bremswegabschnitt ebenfalls eine Bremswirkung entfalten kann, jedoch diese derart gering ist, dass sie im Vergleich zur gesamten Bremswirkung bedeutungslos ist.

Bevorzugt schliesst der zweite Bremswegabschnitt unmittelbar an den ersten Bremswegabschnitt an.

Bei einer bevorzugten Ausführungsform sind das erste Bremsorgan und das zweite Bremsorgan parallel geschaltet. Dies kann beispielsweise mit einer Vorrichtung gemäss der WO 2009/137951 A1 erfolgen. Bei dieser Vorrichtung zur Stossdämpfung von Seilkonstruktionen, insbesondere für Steinschlag-, Murgang- und Schneeverbauungen, ist mindestens ein durch Zugkräfte deformierbares Zwischenstück vorgesehen, welches in einem auf Zug beanspruchten Seil aufgenommen ist. Das Zwischenstück umfasst ein oder mehrere gleichlange Längselemente, welche jeweils als Band, Stab, Draht, Seil und/oder Litze ausgebildet sein können. Das oder die Längselemente stehen mit ihren einen Enden in Verbindung mit dem einen Seilende. Anderseits sind sie um ein mit dem anderen Seilende verbundenen Umlenkelement geführt.

Gemäss der vorliegenden Erfindung könnte ein erstes Zwischenstück mit einem ersten Längselement um ein Umlenkelement geführt ein erstes Bremsorgan ausbilden, wobei das erste Längenelement um eine Längendifferenz länger ist als ein zwischen dem befestigten Ende des ersten Längenelementes und dem Umlenkelement vorliegenden Längenabschnitt und parallel dazu könnte ein zweites Zwischenstück mit einem zweiten Längenelement um das Umlenkelement geführt ein zweites Bremsorgan ausbilden, so dass bei Zug auf das Seil zuerst das erste Bremsorgan und danach das erste Bremsorgan und das zweite Bremsorgan um das Umlenkelement geführt werden. Demzufolge könnte eine gestufte Bremswirkung durch die parallele Anordnung des ersten Bremsorgans und zweiten Bremsorgans erfolgen.

Bei einer weiteren bevorzugten Ausführungsform sind das erste Bremsorgan und das zweite Bremsorgan in Serie geschaltet. Dies kann beispielsweise mit Bremselementen gemäss der EP 1 469 130 A1 erfolgen. Das bekannte Bremselement zum Einsatz in Vorrichtungen zum Aufhalten bewegter Massen wie fallender Sein- oder Eisblöcke besteht im Wesentlichen aus einem stabförmigen Profil, das zu einer Spirale gewunden ist. Das Bremselement weist bei geringer Baulänge eine grosse Energieabsorptionsfähigkeit auf, wobei keine Anfangskraftspitze und im grössten Teil der Streckung der Spirale eine relativ konstante bis leicht ansteigende Bremswirkung auftritt.

Gemäss der vorliegenden Erfindung könnte eine erste Spirale mit einer flachen Charakteristik als erstes Bremsorgan ausgebildet sein und in Serie dazu könnte eine zweite Spirale mit einer steileren Charakteristik als zweites Bremsorgan ausgebildet sein, so dass bei Zug auf das Seil zuerst das erste Bremsorgan maximal und das zweite Bremsorgan weniger gespannt wird und unmittelbar danach das zweite Bremsorgan gespannt wird.

Bei einer besonders bevorzugten Ausführungsform umfasst die erfindungsgemässe Steilbremsanordnung eine, die erste Anschlussstelle bildende Bremsplatte sowie mindestens ein erstes Seilstück und ein zweites Seilstück. Das erste und das zweite Seilstück sind mit der zweiten Anschlussstelle fest verbunden. Die Bremsplatte weist eine erste Reihe von hintereinander liegenden Durchlässen, durch welche das erste Seilstück unter Wechsel der Durchführungsrichtung - das erste Bremsorgan bildend - hindurchgeführt ist, und eine zweite Reihe von hintereinander liegenden Durchlässen, durch welche das zweite Seilstück unter Wechsel der Durchführungsrichtung - das zweite Bremsorgan bildend - hindurchgeführt ist, auf. In betriebsbereitem Zustand weisen das erste Seilstück, von der zweiten Anschlussstelle zur Bremsplatte, einen ersten Zugabschnitt und, bezüglich der Bremsplatte auf einer von der zweiten Anschlussstelle abgewandten Seite, den, einen maximalen Bremsweg bestimmenden, frei von der Bremsplatte wegstehenden ersten Bremswegabschnitt sowie das zweite Seilstück, von der zweiten Anschlussstelle zur Bremsplatte, einen zweiten Zugabschnitt und, bezüglich der Bremsplatte auf der von der zweiten Anschlussstelle abgewandten Seite, den frei von der Bremsplatte wegstehenden zweiten Bremswegabschnitt auf.

Bei einer Bremsung sind die Bremswegabschnitte mit Widerstand durch die Durchlässe hindurchziehbar.

Der zweite Bremswegabschnitt ist um eine Längendifferenz kürzer als der erste Bremswegabschnitt und der zweite Zugabschnitt ist wenigstens annährend um die Längendifferenz länger als der erste Zugabschnitt. Bei der Bremsung wird nur der erste Bremswegabschnitt durch die Bremsplatte gezogen bis der erste Zugabschnitt die gleiche Länge wie der zweite Zugabschnitt erreicht und dann werden beide Bremswegabschnitte miteinander durch die Bremsplatte gezogen.

Die erste Anschlussstelle oder zweite Anschlussstelle ist beispielsweise an einem Erdanker befestigt und die jeweils andere Anschlussstelle ist mit einem das betreffende Steinschlagnetz tragenden Zugseil verbunden.

Die Längendifferenz zwischen dem ersten Bremswegabschnitt und dem zweiten Bremswegabschnitt des Bremselementes definiert eine einfache Bremswirkung. Diese einfache Bremswirkung ermöglicht den Abbau einer Überbeanspruchung auf das Zugseil durch Ziehen des ersten Bremswegabschnitts durch die Bremsplatte, beispielsweise bis der erste Zugabschnitt die gleiche Länge wie der zweite Zugabschnitt aufweist; dabei wird der zweite Zugabschnitt gespannt.

Bei einer zusätzlich aufkommenden Belastung des Steinschlagnetzes durch zusätzlich herabfallendes Gestein, wirkt die zusätzliche Belastung insbesondere auf das Bremselement, welches entsprechend der zusätzlichen Belastung derart entgegenwirkt, indem die beiden Bremswegabschnitte miteinander mit Widerstand durch die Bremsplatte gezogen werden, um eine erhöhte Bremswirkung zu erzeugen.

An dieser Stelle sei erwähnt, dass das erste Seilstück und das zweite Seilstück mit der zweiten Anschlussstelle fest verbunden sind. Sie können sich somit in Zugrichtung relativ zur zweiten Anschlussstelle nicht bewegen.

Bei einer weiteren bevorzugten Ausführungsform ist das erste Seilstück mit dem zweiten Seilstück einstückig ausgebildet. Dies bedeutet, dass die Seilstücke durch ein einziges Seil gebildet sind. Dieses bildet bei der zweiten Anschlussstelle eine Schlaufe und ist, beispielsweise durch eine Klemme, zusammengehalten, so dass sich die beiden Seilstücke des einzigen Seils relativ zur zweiten Anschlussstelle nicht bewegen können. Die Schlaufe bildet die zweite Anschlussstelle.

Es ist auch denkbar, dass das einzige Seil auf der der zweiten Anschlussstelle abgewandten Seite eine Schlaufe bildet und die beiden freien Enden des Seils mit der zweiten Anschlussstelle fest verbunden sind.

Bei einer weiteren bevorzugten Ausführungsform weisen das erste Seilstück und das zweite Seilstück am freien Ende des ersten Bremswegabschnitts bzw. zweiten Bremswegabschnitts je ein Anschlagstück, insbesondere eine Pressklemme, auf. Dies bewirkt eine Endstellung der abgestuften Bremswirkung bei vollausgefahrenem Bremselement, da die Anschlagstücke des ersten und zweiten Seilstücks das weitere Durchziehen der beiden Bremswegabschnitte durch die Bremsplatte verhindern. Entsprechend bildet das Anschlagstück eine Art Sicherung, damit das im Steinschlagnetz aufgefangene Gestein nicht herabfallen kann.

Bei einer bevorzugten Ausführungsform weist der erste Bremswegabschnitt eine Länge zwischen 2m und 4m, vorzugsweise von wenigstens annährend 3m, auf. Der erste Bremswegabschnitt definiert den maximalen Bremsweg der erfindungsgemässen Seilbremsanordnung.

Bei einer weiteren bevorzugten Ausführungsform weist der zweite Bremswegabschnitt eine Länge zwischen 0.5m und 1.5m, vorzugsweise von wenigstens annährend 1m, auf. Der zweite Bremswegabschnitt definiert die Länge mit erhöhter Bremswirkung.

Bei einer weiteren bevorzugten Ausführungsform weist die Längendifferenz eine Länge zwischen 1.5m und 2.5m, vorzugsweise von wenigstens annährend 2m, auf. Die Längendifferenz definiert die Länge der einfachen Bremswirkung, indem bei der Bremsung nur der erste Bremswegabschnitt durch die Bremsplatte gezogen wird, bis der erste Zugabschnitt die gleiche Länge wie der zweite Zugabschnitt erreicht.

Bei einer bevorzugten Ausführungsform ist ein weiteres Seilstück gleich wie das erste Seilstück oder das zweite Seilstück ausgebildet, und entsprechend durch eine weitere Reihe von Durchlässen in der Bremsplatte hindurchgeführt sowie mit der zweiten Anschlussstelle fest verbunden.

Bei gleicher Ausbildung des weiteren Seilstücks wie das erste Seilstück, werden diese beiden Seilstücke miteinander durch die Bremsplatte mit einer erhöhten Bremswirkung geführt, bis der erste Zugabschnitt die gleiche Länge wie der zweite Zugabschnitt erreicht, und dann werden alle drei Seilstücke miteinander durch die Durchlässe der Bremsplatte geführt und bewirken eine weitere Erhöhung der Bremswirkung.

Im anderen Fall, ist das weitere Seilstück gleich ausgebildet wie das zweite Seilstück, so dass nach der einfachen Bremswirkung mit dem ersten Seilstück, alle drei Seilstücke miteinander durch die Durchlässe der Bremsplatte geführt werden.

Somit kann die Bremswirkung mittels weiteren Seilstücken individuell im Hinblick auf das Einsatzgebiet, wie oben ausgeführt, eingestellt werden.

Bei einer weiteren bevorzugten Ausführungsform ist je ein weiteres Seilstück gleich wie das erste Seilstück bzw. zweite Seilstück ausgebildet, und die beiden weiteren Seilstücke sind durch je eine weitere Reihe von Durchlässen durch die Bremsplatte hindurchgeführt sowie mit der zweiten Anschlussstelle fest verbunden. Bei einer derartigen Seilbremsanordnung liegt eine mehrfach erhöhte Bremswirkung vor, was zudem eine robuste und dauerhafte Haltewirkung für sehr schweres Gestein oder Geröll ermöglicht.

Alternativ ist es auch denkbar, dass unabhängig vom ersten Seilstück und zweiten Seilstück ein weiteres Seilstück gleicher Länge entsprechend durch eine weitere Reihe von Durchlässen in der Bremsplatte hindurchgeführt sowie mit der zweiten Anschlussstelle fest verbunden ist, wobei im betriebsbereiten Zustand das weitere Seilstück eine weitere Schlaufe ausbildet, welche länger als der erste Zugabschnitt und kürzer als der zweite Zugabschnitt ist. Auf diese Art und Weise ist es denkbar, mehrstufige Bremswirkungen mit der erfindungsgemässen Seilbremsanordnung zu erzielen.

Weitere Vorteile und Eigenschaften der erfindungsgemässen Seilbremsanordnung gehen aus der nachstehenden Beschreibung eines Ausführungsbeispiels hervor, welches anhand der Zeichnungen erläutert wird.

Es zeigen rein schematisch:

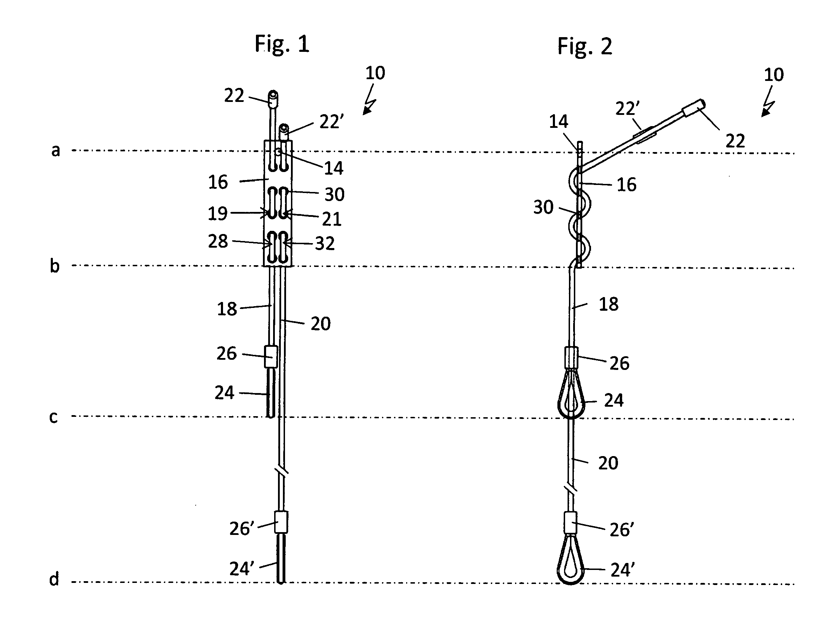

- Fig. 1: in Draufsicht ein Bremselement einer erfindungsgemässen Seilbremsanordnung mit einer Bremsplatte und einem ersten Seilstück sowie einem annähernd gleichlangen zweiten Seilstück, welche in Zugrichtung zueinander versetzt jeweils durch eine erste und eine zweite Reihe von hintereinander liegenden Durchlässen der Bremsplatte hindurchgeführt sind;
- Fig. 2: in Ansicht das Bremselement der Seilbremsanordnung gemäss Fig. 1;

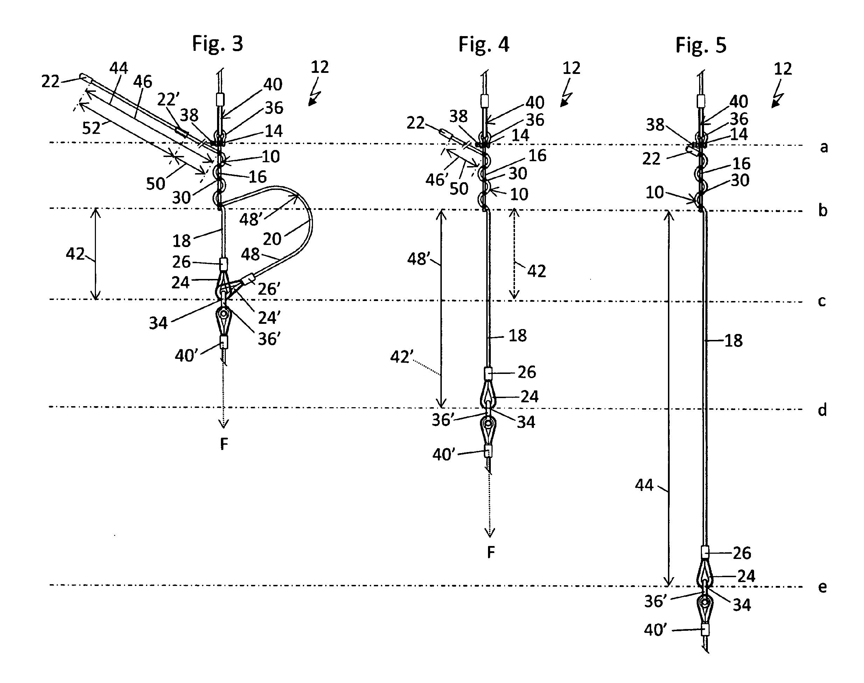

- Fig. 3: in Ansicht die erfindungsgemässe Seilbremsanordnung in montiertem und betriebsbereitem Zustand mit dem von einer ersten Anschlussstelle zu einer zweiten Anschlussstelle verlaufenden Bremselement gemäss Fig. 1;
- Fig. 4: in Ansicht die Seilbremsanordnung in teilweise ausgefahrenem Zustand, nachdem ein erster Bremswegabschnitt des ersten Seilstücks teilweise durch die erste Reihe von Durchlässen der Bremsplatte gezogen wurde, bis ein erster Zugabschnitt des ersten Seilstücks die gleiche Länge wie ein zweiter Zugabschnitt des zweiten Seilstücks erreicht hat, wobei eine einfache Bremswirkung des Bremselementes unter Belastung erfolgte; und
- Fig. 5: in Ansicht die Seilbremsanordnung in vollständig ausgefahrenem Zustand, nachdem ein verkürzter erster Bremswegabschnitt des ersten Seilstücks und ein annähernd gleichlanger zweiter Bremswegabschnitt des zweiten Seilstücks miteinander durch die Bremsplatte gezogen wurde bis der maximale Bremsweg durchgezogen ist, wobei eine erhöhte Bremswirkung des Bremselementes unter zusätzlicher Belastung erfolgte.

Ein in Fig. 1 dargestelltes Bremselement 10 einer erfindungsgemässen Seilbremsanordnung 12 (siehe Fig. 3) umfasst eine eine erste Anschlussstelle 14 bildende Bremsplatte 16 sowie ein erstes Seilstück 18 und ein zweites Seilstück 20.

Die Fig. 1 und Fig. 2 werden figurübergreifend mit Positionslinien a bis d versehen, um den Zusammenhang der Draufsicht gemäss Fig. 1 und Ansicht gemäss Fig. 2 des Bremselementes 10 besser zu illustrieren.

Die Positionslinie a definiert die Position der ersten Anschlussstelle 14 auf der Bremsplatte 16 und die Positionslinie b definiert ein der ersten Anschlussstelle 14 abgewandtes Ende der Bremsplatte 16.

Das erste Seilstück 18 und das zweite Seilstück 20 sind wenigstens annährend gleich lang ausgebildet. Die der ersten Anschlussstelle 14 zugewandten freien Enden der Seilstücke 18, 20 sind mit Anschlagstücken 22, 22', insbesondere Pressklemmen oder Rundklemmen, abgeschlossen. Am der ersten Anschlussstelle 14 abgewandten Ende sind die freien Enden der Seilstücke 18, 20 als Schlaufen 24, 24' ausgebildet und von einer weiteren Pressklemme 26, 26' gehalten.

Die Bremsplatte 16 ist mit einer ersten Reihe 28 von hintereinander liegenden Durchlässen 30 und einer mit einer zweiten Reihe 32 von hintereinander liegenden Durchlässen 30 ausgebildet.

Das erste Seilstück 18 ist unter Wechsel der Durchführungsrichtung durch die erste Reihe 28 von Durchlässen 30 der Bremsplatte 16 hindurchgeführt und bildet ein erstes Bremsorgan 19.

Das zweite Seilstück 20 ist unter Wechsel der Durchführungsrichtung durch die zweite Reihe 32 von Durchlässen 30 der Bremsplatte 16 hindurchgeführt und bildet ein zweites Bremsorgan 21.

Das erste Seilstück 18 ist versetzt zum zweiten Seilstück 20 durch die Durchlässe 30 der Bremsplatte 16 hindurchgezogen, so dass die Schlaufe 24 des ersten Seilstücks 18 an die Positionslinie c gelangt und die Schlaufe 24' des zweiten Seilstücks 20 an die Positionslinie d gelangt.

Das erste Seilstück 18 und das zweite Seilstück 20 sind vorzugsweise als Stahlseil ausgebildet.

Die einzelnen Durchlässe 30 in der Bremsplatte 16 haben einen etwas grösseren Durchmesser als die Stahlseile des ersten Seilstücks 18 und zweiten Seilstücks 20, wodurch ein Klemmen vermieden wird.

Die Öffnungen der Durchlässe 30 sind vorzugsweise angesenkt oder gerundet, um ein sauberes Einlaufen des ersten Seilstücks 16 und zweiten Seilstücks 20 zu ermöglichen.

Die Bremsplatte 16 kann spanend oder spanlos hergestellt werden. Entsprechend kann die Bremsplatte 16 entweder durch Bohrungen erzeugte Durchlässe 30 aufweisen oder die ganze Bremsplatte 16 kann mehr oder weniger fertig aus einem Guss hergestellt sein.

Zur besseren Illustration sind auch die Fig. 3 bis Fig. 5 mit Positionslinien a bis e versehen, um die Betriebszustände der erfindungsgemässen Seilbremsanordnung 12 besser darzustellen. Die Positionslinien a bis d entsprechen denen der Fig. 1 und Fig. 2 hinsichtlich des Bremselementes 10.

In Fig. 3 sind das erste Seilstück 18 und das zweite Seilstück 20 über die Schlaufe 24 bzw. 24' mit einer zweiten Anschlussstelle 34 fest verbunden.

Die erste Anschlussstelle 14 ist mittels eines Schäkels 36, auch Kuhmaul genannt, mit einem Bolzen 38 mit einer Haltevorrichtung 40 eines Erdankers (nicht gezeigt) verbunden und die zweite Anschlussstelle 34 ist mittels eines weiteren Schäkels 36' mit einer weiteren Haltevorrichtung 40' eines Steinschlagnetzes (nicht gezeigt) verbunden.

Es ist jedoch auch denkbar, die Befestigung des Erdankers und des Steinschlagnetzes hinsichtlich der ersten Anschlussstelle 14 und der zweiten Anschlussstelle 34 zu tauschen.

Das erste Seilstück 18 weist, von der zweiten Anschlussstelle 34 (Positionslinie c) zur Bremsplatte 16 (Positionslinie b) einen ersten Zugabschnitt 42 und, bezüglich der Bremsplatte 16 auf einer von der zweiten Anschlussstelle 34 abgewandten Seite, einen, einen maximalen Bremsweg 44 bestimmenden, frei von der Bremsplatte 16 wegstehenden ersten Bremswegabschnitt 46, sowie das zweite Seilstück 20, von der zweiten Anschlussstelle 34 zur Bremsplatte 16 einen als Schlaufe 48 ausgebildeten zweiten Zugabschnitt 48' und, bezüglich der Bremsplatte 16 auf der von der zweiten Anschlussstelle 34 abgewandten Seite, einen frei von der Bremsplatte 16 wegstehenden zweiten Bremswegabschnitt 50 auf.

Der zweite Bremswegabschnitt 50 ist um eine Längendifferenz 52 kürzer als der erste Bremswegabschnitt 46 und der zweite Zugabschnitt 48' ist wenigstens annährend um die Längendifferenz 52 länger als der erste Zugabschnitt 42.

In bevorzugter Weise ist der erste Bremswegabschnitt 46 zwischen 2m und 4m, und besonderes bevorzugt wenigstens annährend 3m, lang. Der zweite Bremswegabschnitt 50 ist vorzugsweise zwischen 0.5m und 1.5m, und besonders bevorzugt wenigstens annährend 1m, lang. Demzufolge ist die Längendifferenz 52 vorzugsweise zwischen 1.5m und 2.5m, und besonders bevorzugt wenigstens annährend 2m, lang.

Die Fig. 3 bis Fig. 5 veranschaulichen die Funktionsweise der erfindungsgemässen Seilbremsanordnung 12 im betriebsbereiten Zustand gemäss Fig. 3, im teilweise ausgefahrenen Zustand gemäss Fig. 4 und im vollständig ausgefahrenen Zustand gemäss Fig. 5, wobei die Positionslinien c bis e die Positionen der zweiten Anschlussstelle 34 bei Zugbeanspruchung unter Belastung (Kraftvektor F) bezogen auf die Bremsplatte 16 (Positionslinie b) kennzeichnen.

Im betriebsbereiten Zustand gemäss Fig. 3 ist die zweite Anschlussstelle 34 an der Positionslinie c und das zweite Seilstück 20 bildet die Schlaufe 48, wenn die Schlaufe 24 des ersten Seilstücks 18 mit der weiteren Schlaufe 24' des zweiten Seilstücks 20 mittels des weiteren Schäkels 36' mit dem weiteren Bolzen 38' mit der zweiten Anschlussstelle 34 fest verbunden ist.

Im Betrieb wird das Bremselement 10 der Seilbremsanordnung 12 bei herabfallendem Gestein in das Steinschlagnetz, insbesondere die zweite Anschlussstelle 34 auf Zugspannung (gezeigt durch den Kraftvektor F) beansprucht, wobei nur der erste Bremswegabschnitt 46 des ersten Seilstücks 18 soweit durch die erste Reihe 28 der Bremsplatte 16 gezogen wird (entspricht einem verkürzten ersten Bremswegabschnitt 46' in Fig. 4), bis der erste Zugabschnitt 42 die gleiche Länge wie der zweite Zugabschnitt 48', erreicht, was zu einer einfachen Bremswirkung des Bremselementes 10 führt, da lediglich das erste Seilstück 18 mit Widerstand durch die Bremsplatte 16 gezogen wird.

Der erste Bremswegabschnitt 46 erreicht nach Durchziehen der Längendifferenz 52 einen verkürzten ersten Bremswegabschnitt 46'.

Zudem wird die in Fig. 3 dargestellte Schlaufe 48 des zweiten Seilstücks 20 entsprechend dem zweiten Zugabschnitt 48' bis zur Positionslinie d gespannt, so dass der um die Längendifferenz 52 verlängerte erste Zugabschnitt 42' gleich lang wie der zweite Zugabschnitt 48' wird; die zweite Anschlussstelle 34 befindet sich gemäss Fig. 4 somit nach vollständiger einfacher Bremswirkung auf der Positionslinie d.

Bei zunehmender Belastung des Bremselementes 10 der Seilbremsanordnung 12, durch weiteres herabfallendes Gestein in das Steinschlagnetz, werden der um die Längendifferenz 52 verkürzte erste Bremswegabschnitt 46' und der zweite Bremswegabschnitt 50 miteinander durch die Bremsplatte 16 gezogen, bis das erste Seilstück 18 und das zweite Seilstück 20 mit je einem am freien Ende des ersten Bremswegabschnitts 46 bzw. zweiten Bremswegabschnitts 50 versehenen Anschlagstück 22 die Bremsplatte 16 erreichen und der maximale Bremsweg 44 überwunden ist.

Durch die miteinander durchgeführten Seilstücke 18, 20 durch die Bremsplatte 16 liegt eine erhöhte Bremswirkung vor, welche die erhöhte Belastung auf die Seilbremsanordnung 12 kompensiert; die zweite Anschlussstelle 34 befindet sich gemäss Fig. 5 nach erhöhter Bremswirkung und vollständiger Überwindung des maximalen Bremsweges 44 auf der Positionslinie e.

Bei einer bevorzugten Ausführungsform der erfindungsgemässen Seilbremsanordnung könnte ein weiteres Seilstück gleich wie das erste Seilstück oder das zweite Seilstück ausgebildet, und entsprechend durch eine weitere Reihe von Durchlässen in der Bremsplatte hindurchgeführt sowie mit der zweiten Anschlussstelle fest verbunden sein.

Bei einer weiteren bevorzugten Ausführungsform der erfindungsgemässen Seilbremsanordnung könnte je ein weiteres Seilstück gleich wie das erste Seilstück bzw. zweite Seilstück ausgebildet sein, und die beiden weiteren Seilstücke könnten durch je eine weitere Reihe von Durchlässen durch die Bremsplatte hindurchgeführt sowie mit der zweiten Anschlussstelle fest verbunden sein.

Darüber hinaus wäre es auch denkbar, dass es unabhängig vom ersten Seilstück und zweiten Seilstück ein weiteres Seilstück gleicher Länge geben könnte, welches entsprechend durch eine weitere Reihe von Durchlässen in der Bremsplatte hindurchgeführt sowie mit der zweiten Anschlussstelle fest verbunden wäre, wobei im betriebsbereiten Zustand das weitere Seilstück eine weitere Schlaufe ausbilden würde, welche länger als der erste Zugabschnitt und kürzer als der zweite Zugabschnitt sein müsste.

Somit ermöglicht die erfindungsgemässe Seilbremsanordnung mittels weiteren Seilstücken auf einfache Art und Weise die Bereitstellung von Bremselementen mit mehrstufiger Bremswirkung.

## Patentansprüche

1. Seilbremsanordnung, insbesondere für Rückhalte-, Abspann- und Tragseile von Steinschlag-, Murgang- und Schneeverbauungen, mit
einem von einer ersten Anschlussstelle (14) zu einer zweiten Anschlussstelle (34) verlaufenden, wenigstens ein erstes Bremsorgan (19) und ein zweites Bremsorgan (21) aufweisenden, bei einer Bremsung einen maximalen Bremsweg (44) zulassenden Bremselement (10), wobei
in einem ersten Bremswegabschnitt (46) des maximalen Bremsweges (44) das erste Bremsorgan (19) Bremswirkung entfaltet und
in einem zweiten Bremswegabschnitt (50) des maximalen Bremsweges (44) das erste und das zweite Bremsorgan (19, 21) Bremswirkung entfalten oder das zweite Bremsorgan (21) Bremswirkung entfaltet und
dass die Bremswirkung im zweiten Bremswegabschnitt (50) grösser ist als im ersten Bremswegabschnitt (46).

2. Seilbremsanordnung gemäss Anspruch 1, **dadurch gekennzeichnet, dass** das erste Bremsorgan (19) und das zweite Bremsorgan (21) parallel geschaltet sind.

3. Seilbremsanordnung nach Anspruch 1 oder 2, **gekennzeichnet durch** eine, die erste Anschlussstelle (14) bildende Bremsplatte (16) sowie mindestens ein erstes Seilstück (18) und ein zweites Seilstück (20), wobei
das erste Seilstück (18) und das zweite Seilstück (20) mit der zweiten Anschlussstelle (34) fest verbunden sind,
die Bremsplatte (16) eine erste Reihe (28) von hintereinander liegenden Durchlässen (30), **durch** welche das erste Seilstück (18) unter Wechsel der Durchführungsrichtung - das erste Bremsorgan (19) bildend - hindurchgeführt ist, und
eine zweite Reihe (32) von hintereinander liegenden Durchlässen (30), **durch** welche das zweite Seilstück (20) unter Wechsel der Durchführungsrichtung - das zweite Bremsorgan (21) bildend - hindurchgeführt ist, aufweist,
in betriebsbereitem Zustand das erste Seilstück (18), von der zweiten Anschlussstelle (34) zur Bremsplatte (16), einen ersten Zugabschnitt (42) und, bezüglich der Bremsplatte (16) auf einer von der zweiten Anschlussstelle (34) abgewandten Seite, einen, den maximalen Bremsweg (44) bestimmenden, von der Bremsplatte (16) wegstehenden ersten Bremswegabschnitt (46), sowie
das zweite Seilstück (20), von der zweiten Anschlussstelle (34) zur Bremsplatte (16), einen wenigstens annährend um die zweite Bremsweglänge längeren zweiten Zugabschnitt (48) als der erste Zugabschnitt (42) und auf der von der zweiten Anschlussstelle (34) abgewandten Seite, den von der Bremsplatte (16) wegstehenden zweiten Bremswegabschnitt (50) aufweist,
bei der Bremsung die Bremswegabschnitte (46, 50) mit Widerstand **durch** die Durchlässe (30) hindurchziehbar sind und nur der erste Bremswegabschnitt (46) **durch** die Bremsplatte (16) gezogen wird bis der erste Zugabschnitt (42) die gleiche Länge wie der zweite Zugabschnitt (48') erreicht und dann beide Bremswegabschnitte (46', 50) miteinander **durch** die Bremsplatte (16) gezogen werden.

4. Seilbremsanordnung nach Anspruch 3, **dadurch gekennzeichnet, dass** das erste Seilstück (18) mit dem zweiten Seilstück (20) einstückig ausgebildet ist.

5. Seilbremsanordnung nach Anspruch 3 oder 4, **dadurch gekennzeichnet, dass** das erste Seilstück (18) und das zweite Seilstück (20) am freien Ende des ersten Bremswegabschnitts (46) bzw. zweiten Bremswegabschnitts (50) je ein Anschlagstück (22), insbesondere eine Pressklemme (22'), aufweisen.

6. Seilbremsanordnung nach einem der Ansprüche 3 bis 5, **dadurch gekennzeichnet, dass** der erste Bremswegabschnitt (46) eine Länge zwischen 2m und 4m, vorzugsweise von wenigstens annährend 3m, aufweist.

7. Seilbremsanordnung nach einem der Ansprüche 3 bis 6, **dadurch gekennzeichnet, dass** der zweite Bremswegabschnitt (50) eine Länge zwischen 0.5m und 1.5m, vorzugsweise von wenigstens annährend 1m, aufweist.

8. Seilbremsanordnung nach einem der Ansprüche 3 bis 7, **dadurch gekennzeichnet, dass** die Längendifferenz (52) eine Länge zwischen 1.5m und 2.5m, vorzugsweise von wenigstens annährend 2m, aufweist.

9. Seilbremsanordnung nach einem der Ansprüche 3 bis 8, **gekennzeichnet durch** ein gleich wie das erste Seilstück (18) oder das zweite Seilstück (20) ausgebildetes weiteres Seilstück, welches **durch** eine weitere Reihe von Durchlässen (30) in der Bremsplatte (16) hindurchgeführt ist.

10. Seilbremsanordnung nach einem der Ansprüche 3 bis 9, **gekennzeichnet durch** je ein gleich wie das erste Seilstück (18) bzw. zweite Seilstück (20) ausgebildetes weiteres Seilstück, wobei die beiden weiteren Seilstücke **durch** je eine weitere Reihe von Durchlässen (30) **durch** die Bremsplatte (16) hindurchgeführt sind.

11. Seilbremsanordnung nach einem der Ansprüche 3 bis 10, **gekennzeichnet durch** je ein gleich wie das erste Seilstück (18) bzw. zweite Seilstück (20) ausgebildetes weiteres Seilstück, wobei die beiden weiteren Seilstücke **durch** je eine weitere Reihe von Durchlässen (30) **durch** die Bremsplatte (16) hindurchgeführt sind.

12. Seilbremsanordnung nach Anspruch 1, **dadurch gekennzeichnet, dass** das erste Bremsorgan (19) und das zweite Bremsorgan (21) in Serie geschaltet sind.
